# FASCICULE DE BREVET EUROPEEN

(11) **EP 2 853 451 B1**
(45) Date de publication et mention de la délivrance du brevet: **17.06.2020**
(21) Numéro de dépôt: 14183813.6
(22) Date de dépôt: 05.09.2014
(51) Int. Cl.: B60S 1/38, B60S 1/52, B60S 1/40

(54) **Connecteur ou adaptateur pour système d'essuyage d'un pare-brise, notamment de véhicule automobile**
Verbindungsteil oder Adapter für ein Scheibenwischsystem, insbesondere für Kraftfahrzeug
Connector or adaptor for a winscreen wiping system, in particular of a motor vehicle

(30) Priorité: 30.09.2013 FR 1359394
(43) Date de publication de la demande: 01.04.2015
(73) Titulaire: Valeo Systèmes d'Essuyage, 78322 Le Mesnil Saint Denis (FR)
(72) Inventeur: Caillot, Gérald, 78720 CERNAY LA VILLE (FR); Jarasson, Jean-Michel, 78321 LE MESNIL SAINT DENIS (FR); Thebault, Denis, 63000 Clermont Ferrand (FR)
(74) Mandataire: Valeo Systèmes d'Essuyage

(56) Documents cités:
- EP-A1- 1 359 073
- EP-A1- 2 733 027
- WO-A1-2011/088977
- DE-A1- 19 757 872
- DE-A1- 19 833 665

## Description

Le domaine de la présente invention est celui des équipements pour les véhicules, et plus particulièrement celui des équipements pour l'essuyage des vitres des automobiles.

Les automobiles sont couramment équipées de systèmes d'essuie-glace pour assurer un lavage du pare-brise et éviter que la vision qu'a le conducteur de son environnement ne soit perturbée. Ces essuie-glaces sont classiquement entraînés par des bras ou porte-balai effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Dans une version récente dénommée "flat blade" (pour "lame plate"), les balais comportent un ensemble semi-rigide qui maintient la lame racleuse sur toute sa longueur.

Il est connu d'articuler le balai par rapport au bras en rotation autour d'un axe de rotation perpendiculaire au plan passant par le balai et orthogonale au pare-brise. Il est en particulier connu des dispositifs de fixation comprenant un connecteur solidaire du balai et connecteur permettant de monter le balai sur le bras de façon amovible de façon à pouvoir en changer en cas d'usure. Le connecteur est monté sur l'adaptateur selon une liaison pivot permettant l'articulation du balai sur le bras autour de l'axe de rotation évoqué plus haut.

Ladite liaison pivot est obtenue grâce à un pion de section circulaire, lié au connecteur, coopérant avec un orifice de forme correspondante prévu dans chacune des faces latérales de l'adaptateur. Une telle articulation présente des frottements importants. De plus, elle implique l'utilisation d'une quantité de matière susceptible de provoquer des difficultés de moulage. Le document DE-A-19833665 montre le préambule de la revendication 1.

L'invention se propose de résoudre les problèmes précédents et porte sur un ensemble formé d'un connecteur et d'un adaptateur pour balai d'essuyage d'un pare-brise, notamment de véhicule automobile, ledit connecteur étant configuré pour permettre une articulation dudit balai par rapport à un bras d'entrainement dudit balai, selon un mouvement de rotation autour d'un axe de rotation.

Selon l'invention, ledit connecteur comprend plusieurs formes en saillie, configurées pour être guidées en rotation par un adaptateur dudit balai sur ledit bras en différentes zones angulairement distantes autour dudit axe de rotation, de manière à autoriser ledit mouvement de rotation. Selon l'invention, lesdites formes en saillie sont configurés pour être guidées par une paroi de circonférence d'un orifice de l'adaptateur, la paroi de circonférence formant un contour fermé.

En prévoyant un guidage en rotation entre le connecteur et l'adaptateur intervenant par l'intermédiaire de différentes zones ainsi réparties de façon discrète, non-continue, autour dudit axe de rotation, on limite les frottements entre ces deux pièces. On facilite ainsi la gestion du jeu entre ces dernières. De plus, on limite les quantités de matière engagées.

Selon différents mode de réalisation de l'invention qui pourront être pris ensemble ou séparément :
- lesdites formes en saillies sont issues de matière dudit connecteur,
- ledit connecteur comprend une surface latérale destinée à être orientée transversalement audit axe de rotation,
- lesdites formes en saillie sont issues de ladite surface latérale,
- lesdites formes en saillie sont issues d'une surface située en retrait de ladite surface latérale de sorte que lesdites formes en saillie présentent une partie porteuse, destinée à être en contact avec ledit adaptateur et distante de ladite surface située en retrait,
- ledit connecteur comprend une gorge entre ladite surface latérale et ladite surface située en retrait,
- lesdites formes en saillie comprennent des pions, avantageusement cylindrique,
- lesdits pions sont de section circulaire, lesdits pions étant configurés pour être tangents à ladite paroi de circonférence,
- lesdits pions sont de section allongée, une portion d'un contour desdits pions étant configurée pour suivre une portion angulaire de ladite paroi de circonférence,
- l'un au moins desdits pions présente une extrémité distale comprenant un chanfrein,
- lesdites formes en saillie comprennent une ou des branches présentant des extrémités destinées à venir en vis-à-vis de zones angulairement distantes de ladite paroi de circonférence,
- la ou lesdites branches sont destinées à suivre une corde dudit orifice, notamment de manière à former un V,
- la ou lesdites branches sont destinées à suivre un diamètre dudit orifice, notamment de manière à former un X,
- lesdites formes en saillies, notamment lesdits pions, occupent des portions angulaires séparées par des portions angulaires dépourvues de saillies.

L'invention concerne également un balai d'essuyage muni d'un ensemble tel que décrit plus haut.

Ledit balai pourra comprendre une âme rigidifiante et une lame raclante, ladite âme conférant un cintrage à ladite lame de manière à favoriser l'application de ladite lame sur le pare-brise. Ledit balai pourra aussi comprendre une agrafe d'accrochage de ladite âme rigidifiante et de ladite lame raclante, située à chaque extrémité longitudinale du balai. Autrement dit, ledit balai est avantageusement du type à lame plate.

Ledit adaptateur pourra être configuré pour permettre la fixation dudit balai d'essuyage sur bras, de façon amovible, pour permettre son remplacement, en particulier en cas d'usure.

L'invention concerne encore un système d'essuyage comprenant un balai tel que décrit plus haut.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue éclatée en perspective d'un exemple de système d'essuyage auquel l'invention s'applique;
- la figure 2 est une vue de face d'une première variante de réalisation d'un connecteur selon l'invention ;
- la figure 3 est une vue en perspective du connecteur du la figure 2 ;
- la figure 4 illustre de manière schématique le connecteur de la figure 2 en vue de coupe, la coupe étant effectuée selon la ligne IV-IV représentée à la figure 2 ;
- la figure 5 une vue de face d'une seconde variante de réalisation d'un connecteur selon ;
- la figure 6 est une vue de face d'une troisième variante de réalisation d'un connecteur selon l'invention ;
- la figure 7 est une vue de face d'une quatrième variante de réalisation d'un connecteur selon l'invention ;
- la figure 8 est une vue de face d'une cinquième variante de réalisation d'un connecteur selon l'invention ;
- la figure 9 est une vue de face d"une sixième variante de réalisation d'un connecteur selon l'invention.

Dans ces dessins, des références numériques identiques sont utilisées pour désigner des éléments identiques ou analogues.

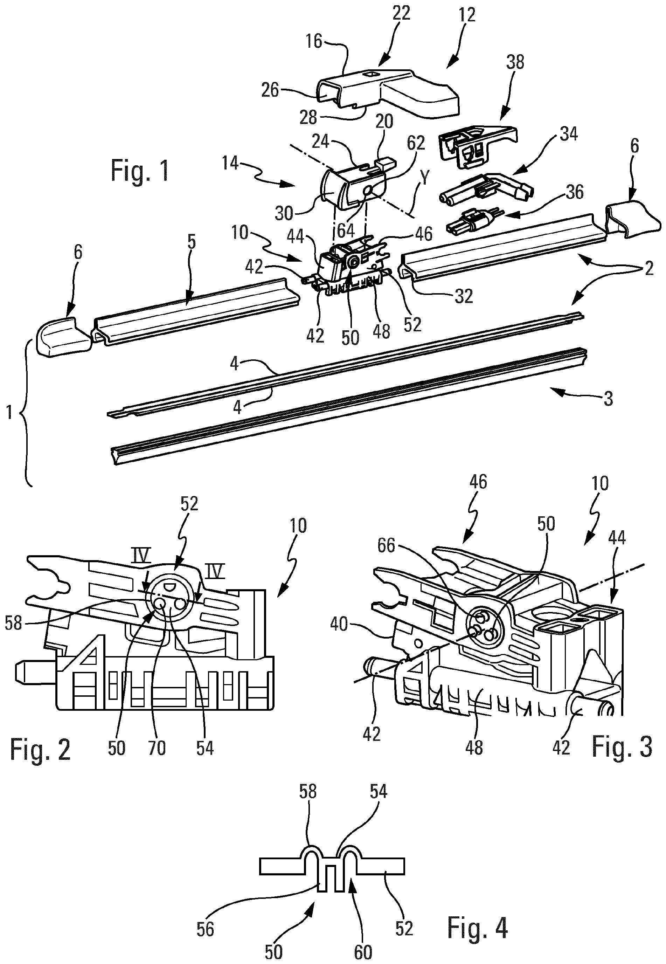

Comme illustré à la figure 1, l'invention concerne un système d'essuyage de pare-brise d'un véhicule, en particulier véhicule automobile. Ledit système est avantageusement destiné à suivre un mouvement angulaire de va et vient permettant d'évacuer l'eau et/ou les autres éléments indésirables recouvrant le pare-brise.

Ledit système d'essuyage comprend un balai 1 d'essuyage dudit pare-brise. Il s'agit, par exemple, d'un balai plat c'est-à-dire du type comprenant une âme rigidifiante 2 et une lame raclante 3, notamment en caoutchouc. Ladite âme rigidifiante 2 confère un cintrage à ladite lame raclante 3 de manière à favoriser l'application de ladite lame raclante sur le pare-brise.

Selon le mode de réalisation illustré, ladite âme rigidifiante 2 comprend deux vertèbres 4, situées au niveau de gorges respectives ménagées dans ladite lame raclante 3.

Selon une variante, non-illustrée, ladite âme rigidifiante comprend un corps muni d'une vertèbre unique située dans un logement ménagé dans ledit corps, le long du balai.

Ledit balai 1 pourra encore comporter un aileron 5 destiné à améliorer le fonctionnement du système d'essuyage. Plus précisément, le but de l'aileron 5 est d'améliorer le plaquage du balai sur le parebrise et donc la performance aérodynamique du système.

Ledit balai 1 pourra en outre comprendre des embouts ou agrafes d'accrochage 6 de ladite âme rigidifiante 2, de ladite lame raclante 3, et/ou dudit aileron 5, lesdites agrafes étant situées à chacune des extrémités longitudinales du balai 1.

Pour assurer son montage sur un bras 12 dudit système d'essuyage, ledit balai 1 comprend un connecteur 10, dit ici mécanique, permettant une articulation dudit balai 1 par rapport au bras 12, permettant l'entrainement dudit balai 1. L'articulation du balai 1 par rapport au bras 12 est une articulation selon un mouvement de rotation autour d'un axe de rotation Y. Le balai doit en effet présenter au moins un degré de liberté en rotation par rapport audit bras, et plus spécifiquement par rapport à une pièce ou partie terminale 16 dudit bras 12, pour permettre au balai de suivre la courbure du vitrage à essuyer. Ledit connecteur mécanique 10 est assujetti, par exemple, à ladite âme rigidifiante 2 du balai 1, notamment par sertissage. Ledit connecteur 10 est, par exemple, issu de moulage. Il est, notamment en plastique.

Ledit système comporte en outre un adaptateur 14, monté libre en articulation sur ledit connecteur mécanique 10 autour dudit axe de rotation Y. Ledit adaptateur 14 est, par exemple, issu de moulage. Il est, notamment en plastique. Le connecteur mécanique 10, porteur du balai, est ici destiné à être inséré dans la chape formant l'adaptateur 14.

Ledit adaptateur 14 est avantageusement configuré pour permettre un montage et un démontage du balai 1 sur le bras 12. Plus précisément, l'adaptateur 14 pourra s'insérer dans la pièce terminale 16 par un mouvement de translation selon un axe longitudinal d'extension de ladite pièce terminale 16, pour venir en position d'utilisation, où il est situé en butée contre la pièce terminale 16 dans laquelle il est fixé de façon réversible au moyen d'un bouton escamotable 20 de verrouillage, qui coopère avec un évidement 22 pratiqué à cet effet dans la partie supérieure de la pièce terminale 16. Dans cette position, ladite pièce terminale 16 recouvre l'adaptateur 14. Le bouton escamotable 20 et l'évidement 22 sont ici prévus en partie supérieure, respectivement dudit adaptateur 14 et de ladite pièce terminale 16, ledit bouton 20 étant situé à une extrémité distale d'une patte flexible 24. De nombreuses variantes de verrouillage sont possibles.

La pièce terminale 16 du bras d'entrainement 12 présente, par exemple, une forme en « U » renversé où l'ouverture de cette forme en « U » fait face au pare-brise. La forme en chape de l'adaptateur 14 est complémentaire, extérieurement, au volume interne de la pièce terminale 16, de sorte à venir se loger dans cette dernière. Lors de la mise en place du balai 1 dans le bras d'entrainement 12, l'adaptateur 14 est introduit dans ladite pièce terminale 16 par une ouverture 26 prévue à l'extrémité distale de cette dernière et guidé par des rebords 28 de ses flancs latéraux, dirigés vers l'intérieur de ladite pièce terminale 16. L'adaptateur 14 présente ici une extrémité 30, dénommée casquette, fermant l'extrémité distale du bras 12.

Le système conforme à l'invention comprend en outre ici un dispositif d'aspersion du pare-brise à partir dudit balai 1.

Ledit dispositif d'aspersion comprend, par exemple, des canaux 32 réalisés dans l'âme rigidifiante 2 et/ou l'âme raclante 3, lesdits canaux 32 permettant de distribuer le liquide de nettoyage à l'intérieur du balai 1 jusqu'à des buses d'aspersion, non visibles, réparties le long dudit balai 1, ici de chacun de ses côtés pour permette une projection du liquide vers l'aval, ou l'amont, quel que soit le sens de rotation du bras 1. Ledit dispositif d'aspersion comprend en outre un connecteur hydraulique 34 alimentant le balai 1 depuis un ou des conduits de circulation dudit liquide, non-illustrés.

Ledit système d'essuyage pourra en outre comporter un dispositif de chauffage du liquide d'aspersion. Ledit dispositif de chauffage comprend, par exemple un ou des fils électriques chauffants, non-visibles, situés dans le balai 1, et un connecteur électrique 36, alimentant le ou lesdits fils chauffants, ledit adaptateur mécanique 10 étant configuré pour permettre le branchement dudit adaptateur électrique 36 et son raccordement auxdits fils chauffants.

Pour faciliter la mise en place du balai 1 dans le bras 12, ledit système pourra en outre comporter un guide 38 positionnant lesdits connecteurs hydraulique 34 et/ou électrique 36 entre ledit bras 12 et ledit balai 1, plus particulièrement pour faciliter le branchement desdits connecteurs hydraulique 34 et/ou électrique 36 audit connecteur mécanique 10 lors d'un changement de balai.

Dans le cas d'un système d'essuyage muni d'un tel dispositif d'aspersion, ledit connecteur 10 pourra comprendre des raccords hydrauliques 40, mieux visibles sur la figure 3, destinés à coopérer avec le connecteur hydraulique 34, et/ou des embouts 42, destinés à coopérer avec l'âme rigidifiante 2 et/ou la lame raclante 3 pour permettre une circulation du liquide d'essuyage dudit connecteur hydraulique 34 vers le bras 1. Il est ici prévu deux dits embouts 42 à chaque extrémité longitudinale dudit connecteur 10, pour alimenter les canaux 32 de distribution du liquide de nettoyage. Lesdits embouts 42 sont reliés deux à deux d'une extrémité longitudinale du connecteur à l'autre par des conduits 48 dudit connecteur 10. Ce dernier pourra encore comprendre :
- un ou des raccords électriques permettant connecter le ou les fils chauffant du balai, et/ou
- un ou des brides 46 d'accrochage du ou des connecteurs hydraulique 34 et/ou électrique 36.

Selon l'invention, ledit connecteur 10 comprend une ou plusieurs formes 50 en saillie, configurées pour être guidées en rotation par l'adaptateur 14 en différentes zones angulairement distantes autour dudit axe de rotation, de manière à autoriser ledit mouvement de rotation. Prises en combinaison, lesdites formes en saillie 50 font donc pivot d'articulation en rotation du connecteur 10 sur l'adaptateur 14 tout en limitant les zones de contact servant à ladite articulation.

Lesdites formes en saillies 50 sont avantageusement issues de matière dudit connecteur 10. Ce dernier présente, par exemple, une forme sensiblement parallélépipédique et lesdites formes en saillie 50 sont situées, notamment dans une partie médiane de surfaces latérales 52 opposées dudit connecteur 10, lesdites surfaces latérales 52 étant orientées transversalement audit axe de rotation Y. Lesdites formes en saillie 50 sont ici positionnées entre lesdites brides 46 et des raccords hydrauliques 44, au-dessus des conduites 48 raccordant lesdits embouts 42 de passage du liquide de nettoyage.

Lesdites formes en saillie pourront être issues de ladite surface latérale 52 ou, comme illustré à la figure 4, d'une surface 54 située en retrait de ladite surface latérale 52 de sorte que lesdites formes en saillie 50 présentent une partie porteuse 56, destinée à être en contact avec ledit adaptateur 14 et distante de ladite surface 54 située en retrait. Ledit connecteur comprend ici une gorge 58, notamment circulaire, entre ladite surface latérale 52 et ladite surface 54 située en retrait. Autrement dit, ladite surface latérale 52 présente un orifice 60 fermée par ladite surface en retrait 54 et à travers laquelle débouchent lesdites formes en saillie 50.

Dans les différents exemples illustrés, la ou lesdites formes en saillie 50 sont configurées pour être guidées par une paroi 62 de circonférence d'un orifice 64, visible figure 1, dudit adaptateur 14, ledit axe de rotation Y passant par ledit orifice 64. Ce dernier pourra plus précisément être centré sur ledit axe de rotation. Ledit orifice 64 est avantageusement circulaire.

Selon les modes de réalisation des figures 2 à 5, lesdites formes en saillie 50 comprennent des pions 70, par exemple cylindriques. Ils sont ici au nombre de trois, répartis à 120° autour de l'axe de rotation Y. L'un au moins desdits pions 70 pourra présenter une extrémité distale comprenant un chanfrein 66.

Plus généralement, lesdites formes en saillies 50 pourront occuper des portions angulaires séparées par des portions angulaires dépourvues de saillies. Ici (figures 2 à 4), les pions 70 occupent chacun des secteurs angulaires d'environ 40°, séparés par des secteurs angulaires, plans, d'environ 80°.

Dans le mode de réalisation des figures 2 à 4, lesdits pions 70 sont de section circulaire, lesdits pions 70 étant configurés pour être tangents à ladite paroi de circonférence de l'adaptateur.

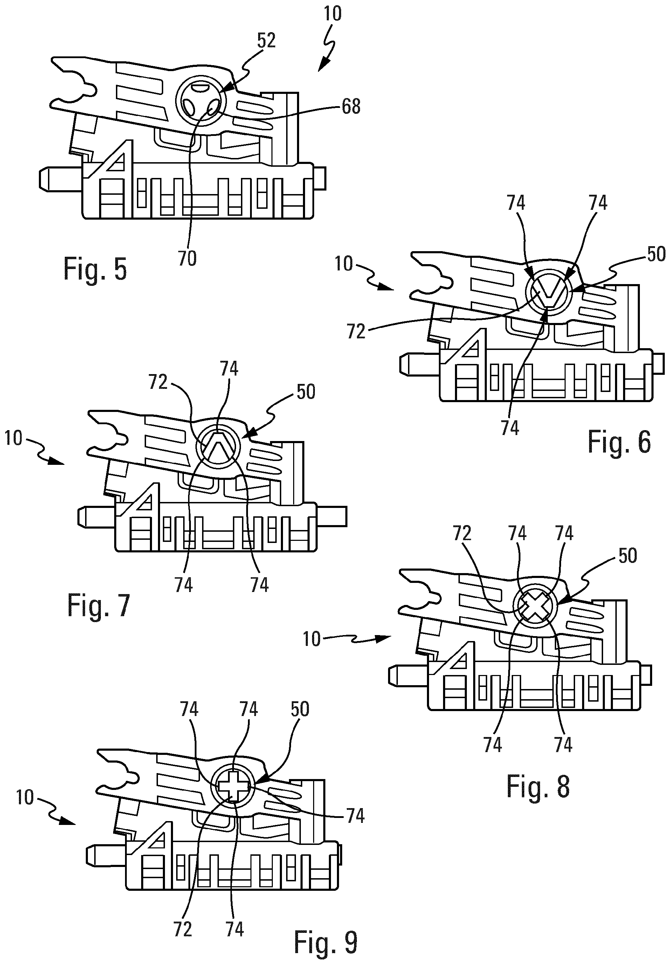

Dans le mode de réalisation de réalisation de la figure 5, lesdits pions 70 sont de section allongée, une portion 68 d'un contour desdits pions étant configurée pour suivre une portion angulaire de ladite paroi de circonférence. On augmente de la sorte mais de façon limitée les zones en regard du connecteur 10 et de l'adaptateur 14 permettant de faire pivot.

Dans les modes de réalisation des figures 6 à 9, lesdites formes en saillie 50 comprennent une ou des branches 72 présentant des extrémités 74 destinées à venir en vis-à-vis de zones angulairement distantes de ladite paroi de circonférence. On rigidifie de la sorte la liaison pivot.

Dans les modes de réalisation des figures 6 et 7, la ou lesdites branches 72 suivent une corde dudit orifice. Dans le mode de réalisation de la figure 6, lesdites branches 72 forme un V ouvert vers une partie supérieure du connecteur 10 tandis que dans le mode de réalisation de la figure 7, elles forme un V ouvert vers une partie inférieure dudit connecteur, c'est-à-dire la partie par laquelle ledit connecteur 10 est fixé à l'âme rigidifiante du balai.

Dans les modes de réalisation des figures 8 et 9, la ou lesdites branches 72 suivent un diamètre dudit orifice. Elles forment, par exemple, une croix en X. Dans le mode de réalisation de la figure 8, il s'agit d'une croix dont les branches sont orientées à 45° par rapport une direction d'extension longitudinale du balai. Dans le mode de réalisation de la figure 9, il s'agit d'une croix dont l'une des branches est parallèle à ladite direction d'extension longitudinale et l'autre orthogonale. Il a été constaté qu'un tel mode de réalisation est particulièrement avantageux en termes de résistances aux efforts subis par le balai, en opérations.

D'autres formes et/ou distribution desdites formes en saillie 50 sont bien sûr possibles sans sortir du cadre de l'invention.

## Revendications

1. Ensemble formé d'un connecteur et d'un adaptateur pour balai d'essuyage d'un pare-brise, notamment de véhicule automobile, le connecteur (10) étant solidaire du balai et l'adaptateur (14) étant destiné à s'insérer dans la pièce terminale d'un bras (12) d'entrainement dudit balai (1), ledit connecteur (10) et ledit adaptateur (14) étant configurés pour permettre une articulation dudit balai (1) par rapport au bras, selon un mouvement de rotation autour d'un axe de rotation, ledit connecteur (10) comprenant plusieurs formes (50) en saillie, configurées pour être guidées en rotation par l'adaptateur (14) en différentes zones angulairement distantes autour dudit axe de rotation, de manière à autoriser ledit mouvement de rotation, lesdites formes en saillie (50) étant configurées pour être guidées par une paroi (62) de circonférence d'un orifice (64) dudit adaptateur (14), ledit axe de rotation étant destiné à passer par ledit orifice (64), **caractérisé en ce que** la paroi (62) de circonférence forme un contour fermé.

2. Ensemble selon la revendication 1 dans lequel lesdites formes en saillies (50) sont issues de matière dudit connecteur (10).

3. Ensemble selon l'une quelconque des revendications 1 ou 2 comprenant une surface latérale (52) destinée à être orientée transversalement audit axe de rotation, et dans lequel lesdites formes en saillie (50) sont issues de ladite surface latérale (52) ou d'une surface (54) située en retrait de ladite surface latérale (54) de sorte que lesdites formes en saillie (50) présentent une partie porteuse (56), destinée à être en contact avec ledit adaptateur (14) et distante de ladite surface (54) située en retrait.

4. Ensemble selon la revendication 3 comprenant une gorge (58) entre ladite surface latérale (52) et ladite surface (54) située en retrait.

5. Ensemble selon l'une des revendications précédentes dans lequel lesdites formes en saillie (50) comprennent des pions (70).

6. Ensemble r selon la revendication 5 dans lequel lesdits pions (70) sont de section circulaire, lesdits pions (70) étant configurés pour être tangents à ladite paroi de circonférence (62).

7. Ensemble selon la revendication 5 dans lequel lesdits pions (70) sont de section allongée, une portion (68) d'un contour desdits pions (70) étant configurée pour suivre une portion angulaire de ladite paroi de circonférence.

8. Ensemble selon l'une quelconque des revendications 5 à 7 dans lequel l'un au moins desdits pions (70) présente une extrémité distale comprenant un chanfrein (66).

9. Ensemble selon l'une des revendications précédentes dans lequel lesdites formes en saillie (50) comprennent une ou des branches (72) présentant des extrémités (74), destinées à venir en vis-à-vis de zones angulairement distantes de ladite paroi de circonférence (62).

10. Ensemble selon la revendication 9 dans lequel la ou lesdites branches (72) sont destinées à suivre une corde dudit orifice (64).

11. Ensemble selon la revendication 9 dans lequel la ou lesdites branches (72) sont destinées à suivre un diamètre dudit orifice (64).

12. Ensemble selon l'une quelconque des revendications 1 à 8 dans lequel lesdites formes en saillies (50) occupent des portions angulaires séparées par des portions angulaires dépourvues de saillies.

13. Balai d'essuyage comprenant un ensemble selon l'une quelconque des revendications précédentes.

14. Système d'essuyage comprenant un balai (1) selon la revendication 13.

## Patentansprüche

1. Anordnung, die aus einem Verbinder und einem Adapter gebildet ist, für ein Wischerblatt einer Windschutzscheibe, insbesondere eines Kraftfahrzeugs, wobei der Verbinder (10) mit dem Blatt fest verbunden ist und der Adapter (14) dazu bestimmt ist, in das Endstück eines Antriebsarms (12) des Blattes (1) eingeführt zu werden, wobei der Verbinder (10) und der Adapter (14) dazu ausgestaltet sind, eine Anlenkung des Blattes (1) in Bezug auf den Arm gemäß einer Drehbewegung um eine Drehachse zu ermöglichen, wobei der Verbinder (10) mehrere vorspringende Formen (50) umfasst, die dazu ausgestaltet sind, von dem Adapter (14) in verschiedenen winklig beabstandeten Bereichen rotatorisch um die Drehachse herum geführt zu werden, so dass die Drehbewegung zugelassen wird, wobei die vorspringenden Formen (50) dazu ausgestaltet sind, von einer Umfangswand (62) einer Öffnung (64) des Adapters (14) geführt zu werden, wobei die Drehachse dazu bestimmt ist, durch die Öffnung (64) zu verlaufen, **dadurch gekennzeichnet, dass** die Umfangswand (62) eine geschlossene Kontur bildet.

2. Anordnung nach Anspruch 1, bei der die vorspringenden Formen (50) mit dem Verbinder (10) einstückig sind.

3. Anordnung nach einem der Ansprüche 1 oder 2, die eine Seitenfläche (52) umfasst, die dazu bestimmt ist, quer zu der Drehachse ausgerichtet zu sein, und bei der die vorspringenden Formen (50) aus der Seitenfläche (52) kommen oder aus einer von der Seitenfläche (54) zurückversetzten Fläche (54), so dass die vorspringenden Formen (50) einen tragenden Teil (56) aufweisen, der dazu bestimmt ist, mit dem Adapter (14) in Kontakt und von der zurückversetzten Fläche (54) beabstandet zu sein.

4. Anordnung nach Anspruch 3, die eine Kehle (58) zwischen der Seitenfläche (52) und der zurückversetzten Fläche (54) umfasst.

5. Anordnung nach einem der vorhergehenden Ansprüche, bei der die vorspringenden Formen (50) Stifte (70) umfassen.

6. Anordnung nach Anspruch 5, bei der die Stifte (70) einen runden Querschnitt haben, wobei die Stifte (70) dazu ausgestaltet sind, tangential zur Umfangswand (62) zu sein.

7. Anordnung nach Anspruch 5, bei der die Stifte (70) einen länglichen Querschnitt haben, wobei ein Abschnitt (68) einer Kontur der Stifte (70) dazu ausgestaltet ist, einem Winkelabschnitt der Umfangswand zu folgen.

8. Anordnung nach einem der Ansprüche 5 bis 7, bei der mindestens einer der Stifte (70) ein distales Ende aufweist, das eine Fase (66) umfasst.

9. Anordnung nach einem der vorhergehenden Ansprüche, bei der die vorspringenden Formen (50) einen oder mehrere Schenkel (72) umfassen, die Enden (74) aufweisen, die dazu bestimmt sind, gegenüber von winklig beabstandeten Bereichen der Umfangswand (62) zu liegen.

10. Anordnung nach Anspruch 9, bei welcher der oder die Schenkel (72) dazu bestimmt sind, einer Sehne der Öffnung (64) zu folgen.

11. Anordnung nach Anspruch 9, bei welcher der oder die Schenkel (72) dazu bestimmt sind, einem Durchmesser der Öffnung (64) zu folgen.

12. Anordnung nach einem der Ansprüche 1 bis 8, bei der die vorspringenden Formen (50) Winkelabschnitte einnehmen, die durch Winkelabschnitte ohne Vorsprünge getrennt sind.

13. Wischerblatt mit einer Anordnung nach einem der vorhergehenden Ansprüche.

14. Wischsystem mit einem Blatt (1) nach Anspruch 13.

## Claims

1. Assembly formed by a connector and an adaptor for a windscreen wiper, notably of a motor vehicle, the connector (10) being secured to the wiper and the adaptor (14) being intended to be inserted into the terminal part of a drive arm (12) of said wiper (1), said connector (10) and said adaptor (14) being configured to allow an articulation of said wiper (1) relative to the arm, by a rotational movement about an axis of rotation, said connector (10) comprising several protruding forms (50), configured to be guided in rotation by the adaptor (14) in different angularly distant zones about said axis of rotation, so as to allow said rotational movement, said protruding forms (50) being configured to be guided by a circumferential wall (62) of an orifice (64) of said adaptor (14), said axis of rotation being intended to pass through said orifice (64), **characterized in that** the circumferential wall (62) forms a closed outline.

2. Assembly according to Claim 1, wherein said protruding forms (50) are made of a piece with said connector (10).

3. Assembly according to either one of Claims 1 and 2, comprising a lateral surface (52) intended to be oriented transversely to said axis of rotation, and wherein said protruding forms (50) are derived from said lateral surface (52) or from a surface (54) situated set back from said lateral surface (54) so that said protruding forms (50) have a supporting part (56), intended to be in contact with said adaptor (14) and away from said surface (54) that is situated set back.

4. Assembly according to Claim 3, comprising a groove (54) between said lateral surface (52) and said surface (54) that is situated set back.

5. Assembly according to one of the preceding claims, wherein said protruding forms (50) comprise pins (70).

6. Assembly according to Claim 5, wherein said pins (70) are of circular section, said pins (70) being configured to be tangential to said circumferential wall (62) .

7. Assembly according to Claim 5, wherein said pins (70) are of elongate section, a portion (68) of an outline of said pins (70) being configured to follow an angular portion of said circumferential wall.

8. Assembly according to any one of Claims 5 to 7, wherein at least one of said pins (70) has a distal end comprising a chamfer (66).

9. Assembly according to one of the preceding claims, wherein said protruding forms (50) comprise one or more branches (72) having ends (74), intended to come to face angularly distant zones of said circumferential wall (62) .

10. Assembly according to Claim 9, wherein the or said branches (72) are intended to follow a cord of said orifice (64).

11. Assembly according to Claim 9, wherein the or said branches (72) are intended to follow a diameter of said orifice (64).

12. Assembly according to any one of Claims 1 to 8, wherein said protruding forms (50) occupy angular portions that are separated by angular portions without protuberances.

13. Wiper comprising an assembly according to any one of the preceding claims.

14. Wiping system comprising a wiper (1) according to Claim 13.
